# EUROPEAN PATENT SPECIFICATION

(11) **EP 2 613 952 B1**
(45) Date of publication and mention of the grant of the patent: **15.10.2014**
(21) Application number: 11776501.6
(22) Date of filing: 24.10.2011
(51) Int. Cl.: B60J 1/20

(54) **ANTI-VANDAL SYSTEM FOR PLANT**
SYSTEM ZUM SCHUTZ VOR VANDALISMUS FÜR PFLANZEN
SYSTÈME ANTI-VANDALISME POUR ÉQUIPEMENT

(30) Priority: 22.10.2010 GB 201017840
(43) Date of publication of application: 17.07.2013
(73) Proprietor: McGuigan, Paul Xavier, Chorley PR6 8BG (GB)
(72) Inventor: Martin Clint, Blackburn, Lancashire, BB1 4LU (GB)
(74) Representative: Hutchinson, Thomas Owen
(86) International application number: PCT/GB2011/052058
(87) International publication number: WO 2012/052783

(56) References cited:
- WO-A2-2004/060097
- FR-A1- 2 916 691
- FR-A1- 2 936 447
- US-A1- 2004 245 755

## Description

This invention relates to an anti-vandal system for the cabs and windows of plant and other machinery, such as cranes, diggers, wheel loaders and the like.

Plant and machinery that is left overnight or unattended on building sites is frequently subjected to acts of vandalism. In particular, it is common for criminals to attempt to break the windows and glazing of the driver's compartment (cab), which can be expensive, inconvenient and time-consuming to repair. Measures therefore already exist to protect the cab glazing of unattended plant, which comprise removable metal plates of acrylic sheets that can be lockably affixed to the exterior of the windows to protect them.

In a known anti-vandal system, each window or glazing panel is provided with a lip above it, from which a protective panel can be suspended, and one or more pins, located below the window or glazing panel, which are arranged to extend through apertures in the protective panel and to which a locking means, such as a padlock, can be affixed to inhibit or prevent unauthorised removal of the protective panel. These known systems suffer from a number of drawbacks, which make them inconvenient to use. In many cases, only a qualified plant driver is allowed to mount the vehicle, which means that unless there is more than one qualified driver present, the attachment and removal of the protective panels must be carried out single-handedly. This can be problematic in wet or slippery situations because if the driver holds a panel with one hand, he or she is unable to maintain three-point contact with the vehicle when moving around, which can present a fall hazard. Moreover, the panels are generally large, bulky and heavy, and are often stored in a compartment on top of the cab, which means that the driver must work from an elevated position to retrieve or stow the panels, which can be dangerous.

Known anti-vandal or damage prevention systems for vehicle windows are described in the following documents:
Published US patent application No: US2004/0245755 describes a protection system for the driver's window of a digger in which there is provided a roof-mounted shutter that slides over the roof and front window of the cab to protect the windshield and roof of the cab. The main drawback of this system is that the shutter described in this document only protects the windshield and the ceiling skylight, whereas the remaining windows must be rendered vandal-proof by other means, such as by being manufactured from a reinforced resin, for example, polycarbonate.
Published US patent application No: US2005/0206189 also describes a windshield protector for a vehicle in which a flexible protective sheet is provided in a spaced-apart position relative to the window being protected. The protective sheet is tensioned, such that upon impact with a projectile, the sheet resiliently deforms to absorb the impact force. A drawback of this system, however, is that where two sheets meet at an angle, there will inevitably be an opening, given that the sheets need to be spaced from the window, through with a projectile could pass, e.g. in the event of deliberate vandalism.
Published Japanese patent application No: JP2000043586 describes a vehicle covers system in which a protective sheet is deployable over four sides of the vehicle. However, this is a folding sheet system in which the sheets fold from a stowed position atop the vehicle to a deployed position over the windows. This system would not be suited to use in a heavy plant situation as it would require an operator to climb on top of the cab to move the protective panels between the stowed and deployed positions.
Published Russian patent application No: RU2037438 describes a similar system to that of JP2000043586 inasmuch as protective panels are provided on a passenger vehicle for protecting portions of the vehicle's windows. However, as the guards do not cover the windows, this system would not afford effective vandal protection, and for the reasons stated above in relation to JP2000043586, nor would it be suited to a heavy plant-type application.
Published French Patent Application No: FR2936447A1 discloses a system for protecting individual windows of a caravan accommodation unit, but not the driver's cab. International patent application No: WO2004/060097 teaches using a roller blind system to cover the windows of a vehicle to protect them from snow, rain and the like, but affords no real protection against acts of vandalism to the vehicle as a whole.

A need therefore arises for an anti-vandal system for plant or other machinery that addresses one or more of the above problems. This invention relates to a method and device for a heavy equipment cab security apparatus, in particular a device for preventing window damage and vandalizing of a heavy equipment cab.

In view of the limitations now present in the prior art, the present invention provides a new and useful method, which may be simpler in construction, more universally usable and/or more versatile in operation than known apparatus of this kind. One purpose of the present invention is to provide new and novel features not present in the prior art, hence resulting in a new concept which is not apparent, obvious, or suggested, either directly or indirectly by any of the prior art apparatus.

According to a first aspect of the invention, there is provided an anti-vandal system for protecting the cab and glazing panels of plant or other machinery, the anti-vandal system comprising: a roller shutter associated with each glazing panel of the cab, the or each roller shutter comprising an articulable sheet comprising a plurality of moveably interconnected slats manufactured from a relatively rigid, tough, durable and/or strong material and being adapted to cover, and extend beyond, a periphery of its associated glazing panel to cover a side of a cab; guide strips associated with the or each roller shutter adapted to inhibit or prevent the articulable sheet or sheets from being distorted away from the glazing panel, locking means for locking the or each articulable sheet in a deployed position whereby it overlies a glazing panel and a side of the cab; and being characterised by: the or each guide strip being adapted for guiding and/or retaining the edges of two adjacent articulable sheets.

The purpose or function of the first aspect of the invention relates to a method and device for a heavy equipment cab security apparatus.

Preferably, the system consists of a roller shutter for each of the windows or glazing panels of a cab, e.g. four roller shutters for a four-windowed cab. Most preferably, the system is installed on the roof of the cab such that, when required, the shutters can be rolled down over each window or glazing panel, e.g. over each side of the cab, to protect the windows thereof. The shutters can be rolled up or down using a handle, pull cord or an electric motor. The kit preferably comprises one or more runners for guiding the shutter sheet during operation. Further, right angle clamps or barrel locks are optionally provided for securing the roller shutters to the windows so that the shutters cannot easily be pulled off or broken. The invention is particularly suited for use with plant or other heavy machinery operated on construction sites, industrial locations etc.

According to a second aspect of the invention, there is provided an anti-vandalism kit that is attached to the roof of an operator's cab of heavy equipment, when left unattended, as set forth in the appendent claims. The device may consist of four roller shutters which, when required, are rolled down by each side of the cab to protect the windows and completely cover the sides of the cab. The shutters may be rolled up or down using a handle or an electric motor. The device may also comprise runners provided for guiding the shutters during operation. Right-angle clamps or barrel locks are optionally provided for securing the rolling shutters to the windows so that the shutters are not pulled off or broken, or blown off in high winds. The shutters are rolled down behind the clamps. The device is applicable to heavy machinery operated in construction sites, industry etc.

According to a third aspect of the invention, there is provided a method and device for a cab security apparatus, in particular a device for preventing window damage and vandalizing of a heavy equipment operator's cab as set forth in the appendent claims. The device is a specifically designed vandal kit consisting of four roller shutters, and is installed on the roof of heavy equipment. The individual shutters are provided in such a manner that they cover the entire side sections of the cab when rolled down. Runners are provided in the kit to guide the shutters during roiling operations. The runners prevent the shutter from blowing away in high wind conditions and prevent any injuries to the operator using the device. The device also optionally includes a set of rectangular clamps that secure the shutters with the runners. The rectangular clamps are arranged such that the shutters roll behind the clamps. The clamps are specifically provided to prevent the shutters from being pulled off or broken in to. Further barrel locks are also used on each side of the shutter panel, to keep the shutter In a lockable position.

According to a fourth aspect of the invention, there is provided an anti-vandal system for protecting the glazing panels of plant or other machinery comprising a roller shutter associated with each glazing panel as set forth in the appendent claims.

Advantageously, the fourth aspect of the invention enables all of the glazing panels to be protected using one or more roller shutters. Roller shutters are particularly advantageous as they can be operated from a remote position, which means that there may be no need for an operator to board the vehicle to deploy or stow the system, which address one of the main problems associated with known anti-vandal systems for plant and other heavy machinery.

The roller shutters extend beyond the glazing panels, for example to cover a side, or most preferably, an entire side, of the cab.

The roller shutters preferably comprise an articulable sheet that is moveable between a stowed position in which it is rolled around a spindle, and a deployed position in which a portion of the articulable sheet is unrolled from the spindle to cover the glazing panel.

The spindle of each roller shutter is preferably biased to urge the articulable sheet to move towards the stowed position. This can be achieved by a spring member associated with the spindle, or another actuator, such as a motor, adapted to rotate the spindle. Deployment of the articulable sheet being achieved by overcoming the biasing force.

The spindle of each roller shutter is preferably located above the glazing panel to be protected, and is most preferably mounted on top of the cab as such an arrangement minimises the likelihood of the stowed shutter obscuring the driver's view.

The anti-vandal system is preferably affixable to the cab of the plant or machinery using existing fixing points. This advantageously means that the structural integrity of the cab is not degraded by drilling into, or welding onto, the cab. In a most preferred embodiment of the invention, the anti-vandal system comprises one or more roller shutters mounted on a chassis, the chassis comprising mountings whose positions correspond to those of the cab's existing mounting points. The chassis may comprise a metal frame that is affixable to the cab's existing mounting points, and which comprises means for securing one or more roller shutter assemblies thereto.

The articulable sheet comprises a plurality of moveably interconnected slats, which are manufactured from a material that is relatively rigid, tough, durable and/or strong. Ideally, the articulable sheet is capable of withstanding the impact of heavy projectiles, such as rocks, bricks, hammers and the like.

Guide means is provided for guiding and/or retaining the edges of the articulable sheets. The guide means may comprise channels within which an edge of the articulable sheets are slideably moveable, or guide strips that inhibit or prevent the articulable sheets from being distorted away from the glazing panels. The guide means are adapted to guide and/or retain the edges of two adjacent articulable sheets, for example, at the intersection of a windshield and side window, or on either side of a door edge or pillar.

Operating means is preferably provided for operating the shutter or shutters from a remote location, such as at ground level adjacent the vehicle. The operating means may comprise an eyelet located on the lower edge of the articulable sheet that can be manipulated using a hook pole. Additionally or alternatively, the operating means may comprise a pull cord. Additionally or alternatively, the roller shutters may be motorised such that they can be deployed or stowed using a fixed or portable, wired or wireless, remote control unit.

Locking means is provided for locking the or each articulable sheet in the deployed position. The locking means may comprise a pin and aperture arrangement that can be padlocked, and/or the articulable sheet may be provided with a lock that engages a portion of the vehicle, another articulable sheet and/or a guide for the articulable sheet.

Possible advantages of the invention may include:
Overcoming one or more deficiencies of prior art devices;
Providing a method and device for a heavy equipment cab security apparatus, which is easier to install than existing devices;
Providing a method and device for a heavy equipment cab security apparatus, which is more effective than existing devices;
Providing method and device for a heavy equipment cab security apparatus, which provides a greater level of protection than existing devices; and
Providing a method and device for a heavy equipment cab security apparatus that is more universally functional in today's market than the prior art devices.

Preferred embodiments of the invention shall now be described, by way of example only, with reference to the accompanying drawings in which:
Figures 1 and 2 are perspective views of a cab from the front and rear, respectively, fitted with an anti-vandal system according to the invention with the roller shutters in a stowed position;
Figure 3 is a perspective view of the cab of Figures 1 and 2 with the roller shutters in a deployed position;
Figures 4 and 5 are, respectively, perspective views of a two-shutter and a four-shutter anti-vandal system in accordance with the invention;
Figure 6 is a detailed, partially cut-away, perspective view of a portion of the anti-vandal system;
Figure 7 is close-up perspective view of a locking means for the anti-vandal system of the invention; and
Figure 8 is close-up perspective view of a corner guide means for the anti-vandal system of the invention.

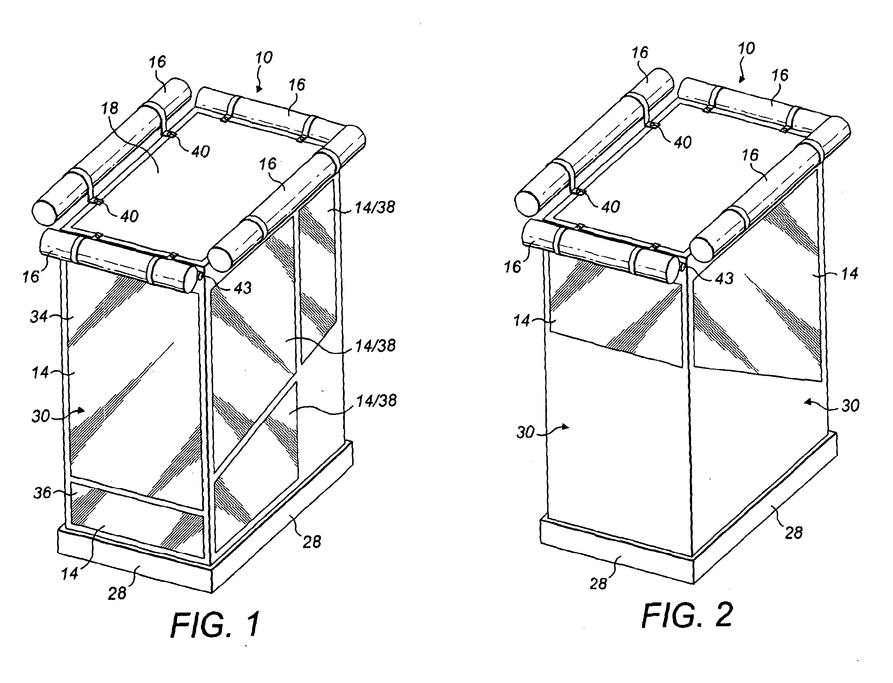

In Figures 1 to 3, an anti-vandal system 10 according to the invention is fitted to the roof 18 of a cab 12 of a digger (not shown). The system 10 provides a cab security apparatus, in particular a device for preventing window damage and vandalizing of a heavy equipment cab 12. The device 10 is a vandal kit that is integrated with the machine to protect the windows 14 of a heavy equipment operator's cab 12, when left unattended. The system 10 comprises four roller shutters 16, and is installed on the roof 18 of the cab 12.

When required, the shutters 16 can be rolled down over each side 30 of the cab 12 to protect the windows 20 thereof. The shutters 16 can be rolled up or down using a handle (not shown) or an electric motor (not shown).

The system 10 also comprises runners 22 for guiding the edges of the shutter sheets 24 during operation. Further, right angle clamps 28 or barrel locks 26 are provided for securing the rolling shutters 16 over the windows 20 so that the shutters 16 cannot easily be pulled off or broken. The system 10 is applicable to heavy machineries operated in construction sites, industries etc.

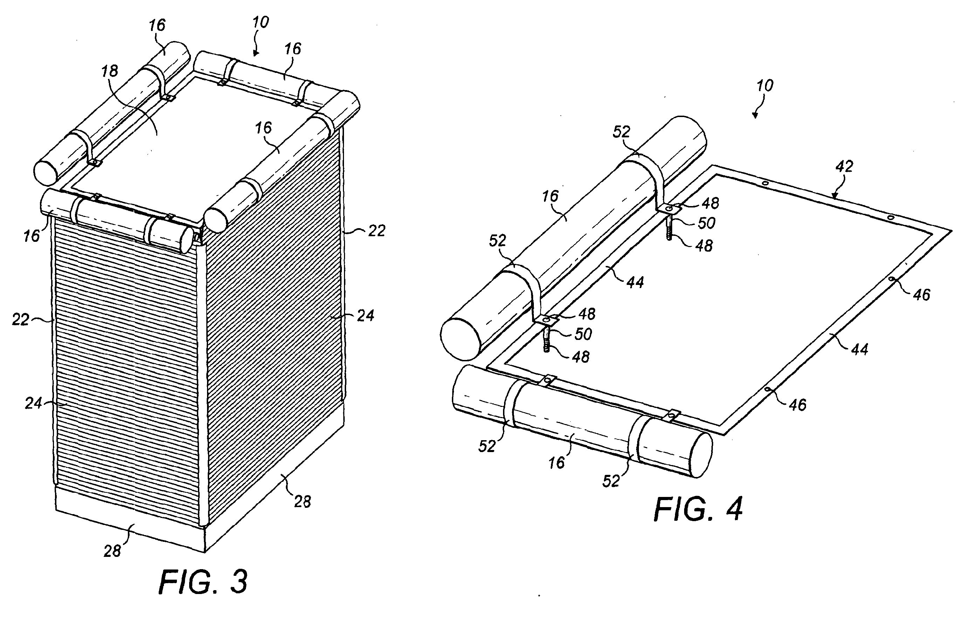

As can be seen from Figure 3 in particular, the shutters 16 are provided in such a manner that they cover the entire side sections 30 of the cab 12 when rolled down. Runners 22 are provided in the kit 10 to guide the edges of the shutter sheets 24 during rolling operations. The runners 22 prevent the shutter from blown away in high wind conditions and reduce the likelihood of any injuries to the operator using the device 10. The system 10 also optionally includes a set of rectangular clamps 28 that secure the shutters 12 to the runners 22. The rectangular clamps 28 are arranged such that the shutter sheets 24 roll behind the clamps 28. The clamps 28 are specifically provided to prevent the shutter sheets 24 from being pulled off or broken into. Further barrel locks 26 are also used on each side of the shutter panel 24, to keep the shutter in a lockable position.

In Figures 1 to 3 it will be noted that the cab 12 of the digger (not shown) has four sides 30, and that each side is individually protectable using its own roller shutter 16. This arrangement is particularly useful as it enables a single shutter 16 to protect more than one window, for example, as shown in Figure 1 where the front shutter protects not only the windshield 34 of the cab 12, but also a floor-level viewing pane 36, and wherein a side shutter 16 protects three side windows 38 simultaneously.

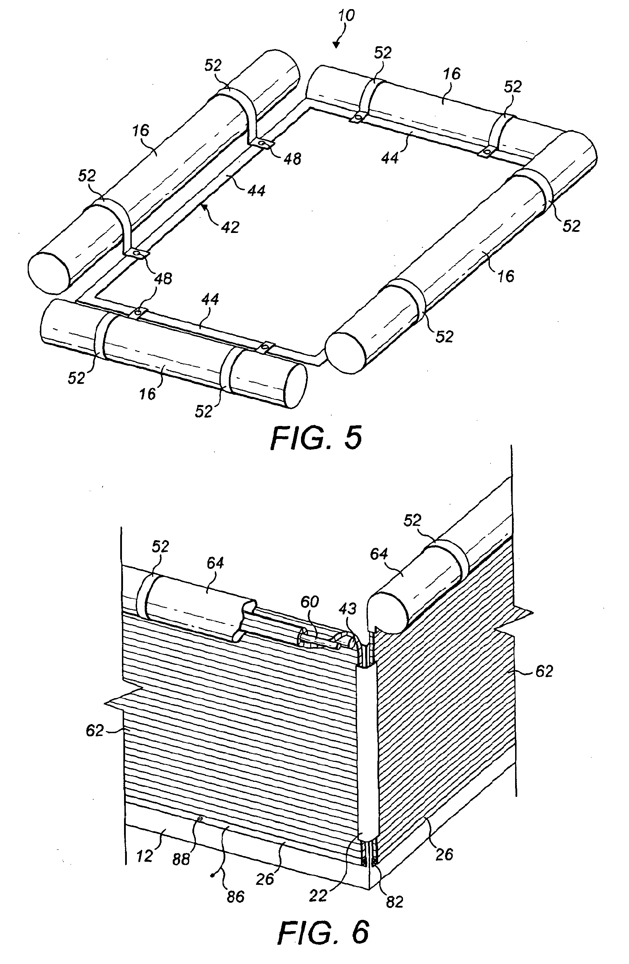

In order to preserve the structural integrity of the cab 12, the system 10 is affixed to the roof 18 of the cab 12 using existing fixing points 40. As can be seen in Figures 4 and 5, the system 10 comprises a chassis 42 comprising a generally rectangular frame 44 of tubular steel whose outline corresponds to the shape of the roof 18 of the cab 12. The frame 44 is provided with through apertures 46 at positions corresponding to the existing mounting points 40 of the cab 12 to which it is intended to be fitted, through which bolts 48 are slidingly receivable, and which engage with the mounting points 40 of the cab. Spacer tubes 50 are also located on the bolts 48 below the frame 44 to maintain the chassis 42 in a spaced apart position with respect to the roof 18 of the cab 12. Retainer bands 52 are welded to the chassis 42, which wrap around and secure the housing of a roller shutter system 16 to the chassis 42. It will be appreciated that the chassis 42 can be relatively easily made or modified to fit to a range of cab sizes and shapes, and that an appropriate number of roller shutters 16 of appropriate dimensions can be affixed to the chassis 42 affording the system a great deal of flexibility and versatility. In order for adjacent rollers to share a common guide channel 22, it will be noted that the front and rear shutters are mounted distally and below the chassis, whereas the side shutters are mounted above an in-line with the edge of the chassis 42. A set of guide rollers 43 are provided for guiding the shutters screens 62 into the shared channels 22.

In Figure 6, the anti-vandal system 10 of the invention can be seen in greater detail. In particular, it will be noted that each roller shutter 16 comprises an elongate spindle 60 around which an articulable sheet 62 of the shutter 16 can be rolled. The spindle 60 is supported at either end on bearings (not shown) so that it can rotate to wind-up or unwind the articulable sheet 62. The bearings (not shown) are affixed to an external housing 64 of the shutter 16, which is in turn connected to the support frame 44 of the chassis 42 by retainer bands 52. The exterior housing 64 has a downwardly open slotted aperture through which the articulable sheet 62 protrudes to cover the windows of the cab 12.

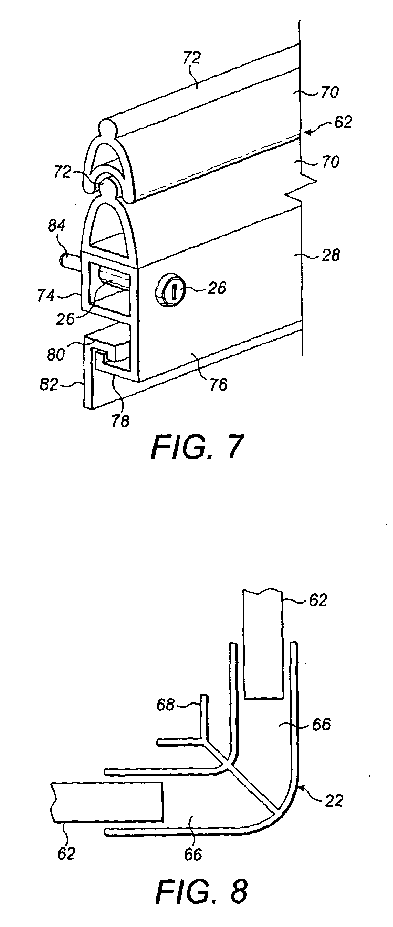

The edges of the articulable sheet 62 are held in place by guide channels 22 in the form of extruded metal channel sections. In Figures 6 and 8, it can be seen that the guide channel 22 is a right-angled channel member providing a pair of channel portions 66 into which edges of the articulable sheets 62 are slidingly receivable. The channel 22 also has an inwardly projecting attachment projection 68 that can be affixed to an external corner of the cab 12 using screws, but preferably and adhesive, so as to maintain the structural integrity of the cab 12.

As can be seen in Figures 3, 6 and 7, each articulable sheet 62 is made up of a number of hingedly interconnected slats 70 that have complementarily-shaped formations 72 to enable them to be hingedly connected to one another. As the slats 70 are hingedly interconnected, the articulable sheet 62 is able to roll up around the spindle 60 of the shutter system 16, when required, but to flatten to cover a window when required. Moreover, the articulated nature of the articulable sheet 62 enables it to conform to non-flat surfaces, as often occurs where the windshield of the cab 12 is raked, for example.

The spindle 60 is spring biased to urge the articulable sheet 62 to roll up. This has a number of advantages inasmuch as it compensates for the weight of the articulable sheet 62, meaning that less effort is required to raise or lower it. Moreover, when deployed, it tensions the articulable sheet to tighten the connection between the complementarily-shaped formations 72 of the slats 70 thereby temporarily rendering the articulable sheet 12 more rigid. In addition, the tension can be used to lock the articulable sheet 62 in the locked position, as shown in Figure 7.

As can be seen in Figure 7, the lower edge of the articulable sheet is provided with a rectangular/right angle locking bar 28, which comprises a main body portion 74 that is screwed to the underside of the lowermost slat 70 and a downwardly projecting strip portion 76 having an L-section projection 78 extending perpendicularly from its lower edge. The lip of the L-section projection 78 engages a complementary L-section projection 80 of a retainer strip 82 that is affixed to the cab 12 below the level of the window to be protected. The tension in the articulable sheet 62 acts to urge the locking bar 78 upwards causing the L-section projections 78, 78 to interlock thereby retaining the articulable sheet 62 in a locked-down position. As can also be seen in Figure 7, the locking bar 28 is provided with a key-operated barrel lock 26 having a locking pin 84 that projects into an appropriately positioned receiving aperture associated the cab 12.
Finally, in Figure 6 it will be noted that the locking bars 78 are provided with a pull cord 86 and a back-up aperture 88, which can be hooked using a hook pole should the pull cord 86 break. The pull cord 86 and aperture 88 enable the shutter to be pulled down or raised from a remote location, i.e. without having to stand on the cab or machine.

## Claims

1. An anti-vandal system (10) for protecting the cab and glazing panels (14) of plant or other machinery, the anti-vandal system (10) comprising: a roller shutter (24) associated with each glazing panel (14) of the cab, the or each roller shutter (24) comprising an articulable sheet comprising a plurality of moveably interconnected slats (70) manufactured from a relatively rigid, tough, durable and/or strong material and being adapted to cover, and extend beyond, a periphery of its associated glazing panel (14) to cover a side (30) of a cab; guide strips (22) associated with the or each roller shutter (16) adapted to inhibit or prevent the articulable sheet or sheets (26) from being distorted away from the glazing panel (14), locking means (26) for locking the or each articulable sheet (26) in a deployed position whereby it overlies a glazing panel (14) and a side (30) of the cab; and being **characterised by**: the or each guide strip (22) being adapted for guiding and/or retaining the edges of two adjacent articulable sheets (26).

2. An anti-vandal system (10) as claimed in claim 1, wherein any one or more of the roller shutters (16) is adapted to cover an entire side of the cab (30).

3. An anti-vandal system (10) as claimed in claim 1 or claim 2, wherein any one or more of the articulable sheets (26) is moveable between a stowed position in which it is rolled around a spindle, and a deployed position in which a portion of the articulable sheet (26) is unrolled from the spindle to cover the glazing panel (14).

4. An anti-vandal system (10) as claimed in claim 3, wherein the spindle is biased to urge the articulable sheet (26) to move towards the stowed position.

5. An anti-vandal system (10) as claimed in claim 4, wherein the spindle is biased to urge the articulable sheet (26) to move towards the stowed position using any one or more of the group comprising: a spring member associated with the spindle; an actuator; and a motor adapted to rotate the spindle.

6. An anti-vandal system (10) as claimed in any of claims 3, 4 or 5, wherein the spindle of each roller shutter (16) is located above the glazing panel (14) to be protected.

7. An anti-vandal system (10) as claimed in claims 6, wherein the spindle of each roller shutter (16) is located on top of the cab.

8. An anti-vandal system (10) as claimed in any preceding claim, affixable to the roof of a cab of the plant or machinery using existing fixing points on the plant or machinery.

9. An anti-vandal system (10) as claimed in claim 8, further comprising a chassis (42, 44) to which one or more roller shutters (16) is affixable, the chassis (42, 44) comprising mountings (46, 48) whose positions correspond to those of the cab's existing mounting points.

10. An anti-vandal system (10) as claimed in claim 9, wherein the chassis (42, 44) comprises a frame that is affixable to the cab's existing mounting points, and which comprises means (52) for securing one or more roller shutter assemblies (16) thereto.

11. An anti-vandal system (10) as claimed in any preceding claim, wherein the guide strip (22) comprises a channel (66) within which an edge of the articulable sheet (62) is slideably moveable.

12. An anti-vandal system (10) as claimed in any preceding claim, further comprising operating means for operating the shutter or shutters (16) from a remote location, the operating means comprising any one or more of the group comprising: an eyelet (88) located at, or near to a lower edge of the articulable sheet (26); a pull cord; a motor; a motor operable using a fixed remote control unit; a motor operable using a portable remote control unit; a motor operable using a wired remote control unit; and a motor operable using a wireless remote control unit.

13. An anti-vandal system (10) as claimed in any preceding claim, wherein the locking means (26) comprises any one or more of the group comprising: a pin and aperture arrangement (84) that can be padlocked; a lock that engages a portion of the vehicle; a lock that engages another articulable sheet; and a lock that engages a guide for the articulable sheet.

14. An anti-vandal system (10) as claimed in any preceding claim, consisting of four roller shutters (16) that are made of aluminium, plastic or steel and runners (22) that guide the shutter (62) to their locking positions on bottom and sides of the machine's operator's cab when they are rolled down and not in use.

## Patentansprüche

1. Anti-Vandalismus-System (10) zum Schutz des Führerhauses und der Verglasungsscheiben (14) von Maschinen und maschinellen Anlagen, wobei das Anti-Vandalismus-System (10) Folgendes umfasst: einen, jeder Verglasungsscheibe (14) des Führerhauses zugeordneten Rollladen (24), wobei der bzw. jeder Rollladen (24) einen beweglichen Rollladenpanzer umfasst, der eine Vielzahl von beweglich miteinander verbundenen Lamellen (70) umfasst, die aus einem relativ steifen, zähen, haltbaren und/oder festen Material hergestellt und dazu ausgestaltet sind, einen Umfang der ihr zugeordneten Verglasungsscheibe (14) abzudecken und sich über diesen hinaus zu erstrecken, um eine Seite (30) eines Führerhauses abzudecken; dem bzw. jedem Rollladen (16) zugeordnete Führungsleisten (22), die dazu ausgestaltet sind, zu verhindern bzw. zu verhüten, dass sich der oder die bewegliche(n) Rollladenpanzer (26) von der Verglasungsscheibe (14) weg verzieht; Verriegelungsmittel (26) zum Verriegeln des oder jedes der beweglichen Rollladenpanzers (26) in heruntergelassener Position, wobei diese über einer Verglasungsscheibe (14) und einer Seite (30) des Führerhauses liegt; und **dadurch gekennzeichnet ist, dass** die oder jede Führungsleiste (22) dazu ausgestaltet ist, die Ränder von zwei benachbarten beweglichen Rollladenpanzer (26) zu führen und/oder festzuhalten.

2. Anti-Vandalismus-System (10) nach Anspruch 1, wobei einer oder mehrere der Rollläden (16) dazu ausgestaltet ist, eine gesamte Seite (30) des Führerhauses abzudecken.

3. Anti-Vandalismus-System (10) nach Anspruch 1 oder Anspruch 2, wobei ein oder mehrere der beweglichen Rollladenpanzer (26) zwischen einer verstauten Position, in der sie um eine Welle gerollt ist, und einer heruntergelassenen Position, in der ein Teil des beweglichen Rollladenpanzers (26) von der Welle abgerollt ist, um die Verglasungsscheibe (14) abzudecken, bewegbar ist.

4. Anti-Vandalismus-System (10) nach Anspruch 3, wobei die Welle dahingehend vorgespannt ist, den beweglichen Rollladenpanzer (26) in Richtung der verstauten Position zu bewegen.

5. Anti-Vandalismus-System (10) nach Anspruch 4, wobei die Welle dahingehend vorgespannt ist, den beweglichen Rollladenpanzer (26) in Richtung der verstauten Position zu bewegen, mithilfe eines oder mehrerer aus der Gruppe, die Folgendes umfasst: ein der Welle zugeordnetes Federelement, ein Stellglied und einen Motor, der dazu ausgestaltet ist, die Welle zu drehen.

6. Anti-Vandalismus-System (10) nach einem der Ansprüche 3, 4 oder 5, wobei die Welle jedes der Rollläden (16) oberhalb der zu schützenden Verglasungsscheibe (14) angeordnet ist.

7. Anti-Vandalismus-System (10) nach Anspruch 6, wobei sich die Welle jedes der Rollläden (16) oben auf dem Führerhaus befindet.

8. Anti-Vandalismus-System (10) nach einem der vorhergehenden Ansprüche, das mithilfe von vorhandenen Befestigungspunkten an der Maschine oder maschinellen Anlage auf dem Dach eines Führerhauses der Maschine oder maschinellen Anlage befestigbar ist.

9. Anti-Vandalismus-System (10) nach Anspruch 8, ferner umfassend ein Chassis (42, 44), an dem ein oder mehrere Rollläden (16) fixierbar ist, wobei das Chassis (42, 44) Halterungen (46, 48) umfasst, deren Positionen denen der vorhandenen Befestigungspunkte des Führerhauses entsprechen.

10. Anti-Vandalismus-System (10) nach Anspruch 9, wobei das Chassis (42, 44) einen Rahmen umfasst, der an den vorhandenen Befestigungspunkten des Führerhauses fixierbar ist und Mittel (52) zum Befestigen einer oder mehrerer Rollladenanordnungen (16) an denselben umfasst.

11. Anti-Vandalismus-System (10) nach einem der vorhergehenden Ansprüche, wobei die Führungsleiste (22) eine Auskehlung (66) umfasst, in dem ein Rand eines beweglichen Rollladenpanzers (62) verschiebbar beweglich ist.

12. Anti-Vandalismus-System (10) nach einem der vorhergehenden Ansprüche, ferner umfassend Betätigungsmittel zum Betätigen des oder der Rollläden (16) von einem entfernten Ort, wobei die Betätigungsmittel eines oder mehrere aus der Gruppe umfasst, die Folgendes umfasst: eine Öse (88), die an oder in der Nähe einer unteren Kante des beweglichen Rollladenpanzers (26) angeordnet ist; eine Zugschnur; einen Motor; einen Motor, der mit einer ortsfesten Fernbedienung betätigt werden kann; einen Motor, der mit einer tragbaren Fernbedienung betätigt werden kann; einen Motor, der mit einer Kabelfernbedienung betätigt werden kann; und einen Motor, der mit einer drahtlosen Fernbedienung betätigt werden kann.

13. Anti-Vandalismus-System (10) nach einem der vorhergehenden Ansprüche, wobei das Verriegelungsmittel (26) eine oder mehrere aus der Gruppe umfasst, die Folgendes umfasst: eine Stift- und Öffnungsanordnung, die mit einem Vorhängeschloss gesichert werden kann; eine Verriegelung, die in einen Teil des Fahrzeugs eingreift; eine Verriegelung, die in einen anderen beweglichen Rollladenpanzer (26) eingreift; und eine Verriegelung, die in eine Führung für den beweglichen Rollladenpanzer (26) eingreift.

14. Anti-Vandalismus-System (10) nach einem der vorhergehenden Ansprüche, bestehend aus vier Rollläden (16) aus Aluminium, Plastik oder Stahl und Laufschienen (22), die den Rollladen (62) in deren Verriegelungspositionen am unteren Ende und den Seiten des Führerhauses der Maschine führen, wenn sie herabgelassen sind und nicht benutzt werden.

## Revendications

1. Système anti-vandalisme (10) pour protéger la cabine et les panneaux de vitrage (14) d'un équipement ou autre matériel, le système anti-vandalisme (10) comprenant : un volet roulant (24) associé à chaque panneau de vitrage (14) de la cabine, le ou chaque panneau de vitrage (24) comprenant une feuille articulable comprenant une pluralité de lattes reliées entre elles de façon mobile (70) fabriquées à partir d'un matériau relativement rigide, robuste, durable et/ou résistant, et étant apte à recouvrir et s'étendre au-delà d'une périphérie de son panneau de vitrage associé (14) pour recouvrir un côté (30) d'une cabine ; des bandes de guidage (22) associées au ou à chaque volet roulant (16), aptes à interdire ou empêcher la ou les feuilles articulables (26) d'être déformées à l'écart du panneau de vitrage (14), des moyens de verrouillage (26) pour verrouiller la ou chaque feuille articulable (26) dans une position déployée dans laquelle elle recouvre un panneau de vitrage (14) et un côté (30) de la cabine ; et étant **caractérisé par le fait que** : la ou chaque bande de guidage (22) est agencée pour guider et/ou retenir les bords de deux feuilles articulables adjacentes (26).

2. Système anti-vandalisme (10) selon la revendication 1, dans lequel un ou plusieurs des volets roulants (16) sont aptes à recouvrir un côté entier de la cabine (30).

3. Système anti-vandalisme (10) selon l'une des revendications 1 ou 2, dans lequel une ou plusieurs des feuilles articulables (26) sont mobiles entre une position rangée dans laquelle elles sont roulées autour d'un arbre, et une position déployée dans laquelle une partie de la feuille articulable (26) est déroulée de l'arbre pour recouvrir le panneau de vitrage (14).

4. Système anti-vandalisme (10) selon la revendication 3, dans lequel l'arbre est sollicité pour amener la feuille articulable (26) à se déplacer vers la position rangée.

5. Système anti-vandalisme (10) selon la revendication 4, dans lequel l'arbre est sollicité pour amener la feuille articulable (26) à se déplacer vers la position rangée à l'aide d'un ou plusieurs dans le groupe comprenant : un élément ressort associé à l'arbre ; un actionneur ; et un moteur agencé pour faire tourner l'arbre.

6. Système anti-vandalisme (10) selon l'une quelconque des revendications 3, 4 ou 5, dans lequel l'arbre de chaque volet roulant (16) est situé au-dessus du panneau de vitrage (14) devant être protégé.

7. Système anti-vandalisme (10) selon la revendication 6, dans lequel l'arbre de chaque volet roulant (16) est situé sur le dessus de la cabine.

8. Système anti-vandalisme (10) selon l'une quelconque des revendications précédentes, apte à être fixé au plafond d'une cabine de l'équipement ou du matériel à l'aide de points de fixation existants sur l'équipement ou le matériel.

9. Système anti-vandalisme (10) selon la revendication 8, comprenant en outre un châssis (42, 44) auquel un ou plusieurs volets roulants (16) sont aptes à être fixés, le châssis (42, 44) comprenant des montures (46, 48) dont les positions correspondent à celles des points de montage existants de la cabine.

10. Système anti-vandalisme (10) selon la revendication 9, dans lequel le châssis (42, 44) comprend un cadre qui est apte à être fixé aux points de montage existants de la cabine, et qui comprend des moyens (52) pour fixer un ou plusieurs ensembles volets roulants (16) à celui-ci.

11. Système anti-vandalisme (10) selon l'une quelconque des revendications précédentes, dans lequel la bande de guidage (22) comprend un canal (66) dans lequel un bord de la feuille articulable (26) est mobile de façon coulissante.

12. Système anti-vandalisme (10) selon l'une quelconque des revendications précédentes, comprenant en outre des moyens d'actionnement pour actionner le volet ou les volets (16) à partir d'un emplacement à distance, les moyens d'actionnement comprenant un ou plusieurs dans le groupe comprenant : un oeillet (88) situé à ou près d'un bord inférieur de la feuille articulable (26) ; un cordon de tirage ; un moteur ; un moteur actionnable à l'aide d'une unité de commande à distance fixe ; un moteur actionnable à l'aide d'une unité de commande à distance portable ; un moteur actionnable à l'aide d'une unité de commande à distance filaire ; et un moteur actionnable à l'aide d'une unité de commande à distance sans fil.

13. Système anti-vandalisme (10) selon l'une quelconque des revendications précédentes, dans lequel les moyens de verrouillage (26) comprennent un ou plusieurs dans le groupe comprenant : un agencement goupille et ouverture (84) qui peut être cadenassé ; un verrou qui vient en prise avec une partie du véhicule ; un verrou qui vient en prise avec une autre feuille articulable ; et un verrou qui vient en prise avec un guide pour la feuille articulable.

14. Système anti-vandalisme (10) selon l'une quelconque des revendications précédentes, consistant en quatre volets roulants (16) qui sont faits d'aluminium, de matière plastique ou d'acier, et des coulisses (22) qui guident le volet (62) vers ses positions de verrouillage à la partie inférieure et sur les côtés de la cabine de l'opérateur de la machine, lorsqu'ils sont déroulés vers le bas et non utilisés.
